Europäisches Patentamt

European Patent Office

Office européen des brevets

(19)

(11) Publication number: **0 270 119**
**A2**

(12) **EUROPEAN PATENT APPLICATION**

(21) Application number: 87117910.7

(22) Date of filing: 03.12.87

(51) Int. Cl.⁴ **C22C 29/12**

(30) Priority: 04.12.86 JP 287727/86

(43) Date of publication of application:
08.06.88 Bulletin 88/23

(84) Designated Contracting States:
**DE FR GB**

(71) Applicant: **Taiyo Yuden Kabushiki Kaisha**
**2-12, Ueno 1-chome**
**Taito-ku Tokyo 110(JP)**

(72) Inventor: **Kishi, Hiroshi**
**No. 1203, Higashihirai**
**Fujioka-shi Gunma-ken(JP)**
Inventor: **Murai, Shunji**
**Taiyo-so No. 2-1-38, Nakaimachi**
**Takasaki-shi Gunma-ken(JP)**
Inventor: **Chazono, Hirokazu**
**No. 780, Kenzakimachi**
**Takasaki-shi Gunma-ken(JP)**
Inventor: **Fukui, Masami**
**No. 1062-2, Kamisatomi**
**Harunamachi Gunma-ken(JP)**
Inventor: **Yamaoka, Nobutatsu**
**No. 226-7, Nakasatomi**
**Harunamachi Gunma-ken(JP)**

(74) Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

(54) Semiconductor ceramic of grain boundary insulation type.

(57) There is disclosed a semiconductor ceramic of grain boundary insulation type comprising a polycrystalline substance. Each of grains (2) constituting said polycrystalline substance comprises a semiconductive oxide main phase (3) and a dielectric oxide composite phase (4) surrounding said main phase (3) and composed of a component of said main phase (3) and a component other than that of said main phase (3).

FIG.1

0 270 119

December 3, 1987

# SEMICONDUCTOR CERAMIC OF GRAIN BOUNDARY INSULATION TYPE

Detailed Description of the Invention:

(Field of Industrial Applications)

This invention relates to a semiconductor ceramic of grain boundary insulation type.

(Prior Art)

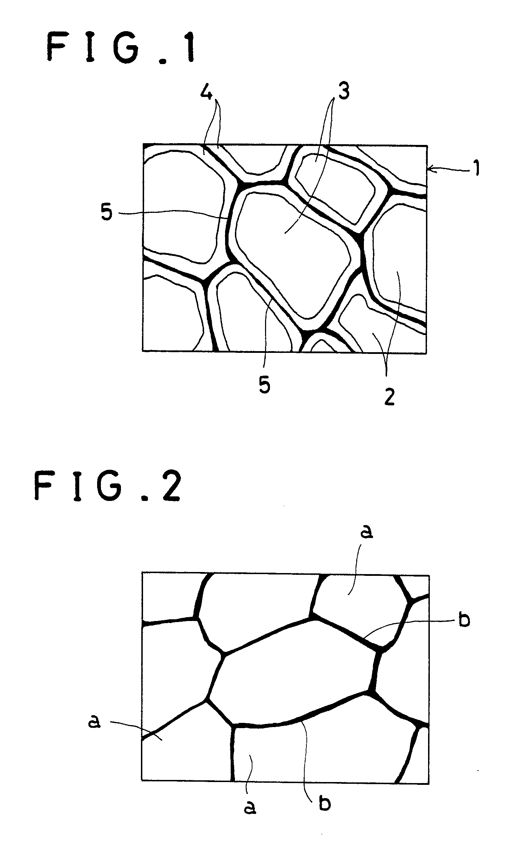

Semiconductor ceramics, such as $BaTiO_3$, $SrTiO_3$, $(Ba_{1-x}Sr_x)TiO_3$, $(Sr_{1-x}Ca_x)TiO_3$, and $(Ba_{1-x}Ca_x)TiO_3$, are hitherto known as semiconductor ceramics of grain boundary insulation type. As shown in FIG.2, these semiconductor ceramics comprise semiconductive grains $\underline{a}$ constituting a polycrystal and grain boundary phases $\underline{b}$ present between these grains $\underline{a}$. The apparent specific inductive capacity, $\varepsilon$app, of the semiconductor ceramics is determined by the combination of the material constituting the grains $\underline{a}$ with the material constituting the grain boundary phase $\underline{b}$.

(Problems to be Solved by the Invention)

However, the apparent specific inductive capacity, $\varepsilon$app, can be improved only to a limited extent by a mere exchange of the material of the grain boundary phase $\underline{b}$. Therefore, when a ceramic capacitor having a higher capacitance is required, it is a usual practice to cause grains to grow to have a large size and reduce the width of the grain boundary phase. However, this expedient has a drawback that the capacitance of the ceramic capacitor obtained is not so high.

An object of the present invention is to provide a semiconductor ceramic of grain boundary insulation type improved in the apparent specific inductive capacity, $\epsilon$app.

(Means to Solve the Problems)

The semiconductor ceramic of grain boundary insulation type according to the present invention comprises a polycrystalline substance in which each grain constituting said polycrystalline substance comprises a semiconductive oxide main phase and a dielectric oxide composite phase surrounding said main phase and composed of a component of said main phase and a component other than that of said main phase.

(EXAMPLES)

The present invention will now be described by way of examples with reference to the accompanying drawings.

Brief Description of the Drawings:

FIG. 1 is a schematic view of a crystalline structure of an example of the semiconductor ceramic of grain boundary insulation type according to the present invention, and FIG. 2 a schematic view of a crystalline structure of a conventional semiconductor ceramic of grain boundary insulation type.

It contains:

1...polycrystal, 2...grain, 3...main phase,
4...composite phase, 5...grain boundary phase

In the drawing, numeral 1 designates a polycrystal constituting a semiconductor ceramic of grain boundary insulation type. Each grain 2 comprises a semiconductive oxide main phase 3 and a dielectric oxide composite phase 4 surrounding the main phase. The composite phase 4 comprises a dielectric oxide in the form of a solid solution composed of a component of the main phase and a component other than that of the main phase. In the drawing, numeral 5 designates a grain boundary phase present between the grains 2.

The main phase generally comprises an oxide containing at least one element selected from among Mg, Ca, Sr, Ba, Ni, Cu, Zn, Pb and Bi and at least one element selected from among Ti, Zr, Nb, Ta, Cr, Mn, Fe, Co, Y, La, Ce, Pr, Nd, Sm, Dy, Aℓ, Si, W, Sn and Sb, e.g., a perovskite type semiconductive oxide such as $BaTiO_3$, $SrTiO_3$, $(Ba_{1-x}Sr_x)TiO_3$, $(Sr_{1-x}Ca_x)TiO_3$ or $(Ba_{1-x}Ca_x)TiO_3$ and a semiconductive oxide of a single element, such as $TiO_2$, $SnO_2$ or ZnO.

With respect to the composite phase 4, the component other than that of the main phase 3 which constitutes the solid solution together with the component of the main phase 3 is selected from among Li, Na, K, Mg, Ca, Sr, Ba, Ni, Cu, Zn, Pb, Bi, Ti, etc.

The grain boundary phase 5 is present in the form of a glassy matrix composed of an element selected

5

from among Li, Na, K, Si, Mn, Cu, Aℓ, B, Mg, Ca, Sr, Ba, Ni, Zn, etc.

More specific examples of the present invention will now be described together with comparative examples.

EXAMPLE 1

A zinc oxide (ZnO) powder having a purity of 99.9% was heat-treated at 1250°C for 5 hr to increase the particle diameter, thereby obtaining a ZnO powder having an average particle diameter of 8 μm.

Thereafter, 50 g of ZnO, 1.36 g of calcium chloride ($CaCl_2$), and 3.49 g of titanium chloride ($TiCl_4$) were weighed out so that the proportions of $CaCl_2$ and $TiCl_4$ were respectively 2 mol% and 3 mol% based on 1 mol of ZnO, and stirred in a ball mill using water as a solvent for 10 hr. 5 mol of aqueous ammonia was added to the resulting mixture, thereby precipitating fine particles of calcium and titanium on the ZnO powder. Then, the precipitates were filtered and dried. A PVA binder was added to the resulting powder, followed by mixing in an attritor for about 30 min to prepare nodules. The obtained nodules were put in a mold and compressed under a pressure of 2 ton/$cm^2$ to form a disk having a diameter of 20 mmφ and a thickness of 1 mm. The disk was then

6

fired at 1300°C for 2 hr. Thus, there were obtained 50 sinters.

Some of the obtained sinters were sliced and treated with an ion mill, followed by the examination of an elementary composition of the sinter with a scanning transmission electron microscope (STEM). As a result, it was found that the sinter comprised grains each composed of a main phase composed of ZnO and a composite phase composed of $(Zn, Ca)TiO_3$ and surrounding the main phase, and grain boundary phases present between these grains.

Thereafter, both surfaces of the remaining sinters were coated with silver by baking to prepare semiconductor ceramics of grain boundary insulation type. With respect to each semiconductor ceramic, the apparent specific inductive capacity, $\varepsilon$ app, dielectirc loss, tan$\sigma$, and insulation resistance, IR, were measured and the data thus obtained were averaged. The results are shown in the following table.

COMPARATIVE EXAMPLE 1

50.0 g of zinc oxide (ZnO) having an average particle diameter of 8 μm, 1.23 g of calcium carbonate $(CaCO_3)$, and 1.47 g of titanium oxide $(TiO_2)$ were weighed out so that the proportions of $CaCO_3$ and $TiO_2$ were respectively 2 mol% and 3 mol% based on

7

1 mol of ZnO. Thereafter, the same procedures as those of EXAMPLE 1 were repeated to obtain a sinter. The obtained sinter was coated with silver by baking to obtain a sample, followed by measurement of the apparent specific inductive capacity, εapp, etc. The results are shown in the following table.

EXAMPLE 2

A titanium oxide ($TiO_2$) powder having a purity of 99.6% was heat-treated at 1250°C for 2 hr to increase the particle diameter, thereby obtaining a $TiO_2$ powder having an average particle diameter of 5 μm.

Thereafter, 50 g of $TiO_2$, 4.89 g of barium nitrate [$Ba(NO_3)_2$], and 2.64 g of strontium nitrate [$Sr(NO_3)_2$] were weighed out so that the proportions of $Ba(NO_3)_2$ and $Sr(NO_3)_2$ were respectively 3 mol% and 2 mol% based on 1 mol of $TiO_2$, and subjected to wet mixing in a ball mill using water as a solvent for 10 hr. The resulting mixture was spray dried with a spray drier to obtain a powder. The powder was molded into a disk in the same manner as that of EXAMPLE 1. The disk was then fired at 1300°C for 2 hr in a reducing atmosphere composed of 4% of $H_2$ and 96% of $N_2$. Thus, there were obtained 50 sinters.

Thereafter, elementary compositions of the

8

sinters thus obtained were examined with a scanning transmission electron microscope. As a result, it was found that the sinter comprised grains each composed of a main phase composed of $TiO_2$ and a composite phase composed of $(Ba, Sr)TiO_3$ and surrounding the main phase, and grain boundary phases present between these grains.

Then, one side of each of the remaining sinters was coated with an insulating paste composed of $Bi_2O_3$-$CuO$-$B_2O_3$ in an amount of 5% by weight based on the weight of the sinter, followed by heat treatment at 1200°C in the air, thereby preparing semiconductor ceramics of grain boundary insulation type. The semiconductor ceramics were subjected to the measurement of the apparent specific inductive capacity $\varepsilon_{app}$, etc. The data thus obtained were averaged and the results are shown in the following table.

COMPARATIVE EXAMPLE 2

50 g of titanium oxide ($TiO_2$) having an average particle diameter of 5 μm, 3.7 g of barium carbonate ($BaCO_3$), and 1.85 g of strontium carbonate ($SrCO_3$) were weighed out so that the proportions of $BaCO_3$ and $SrCO_3$ were respectively 3 mol% and 2 mol% based on 1 mol of $TiO_2$. Thereafter, the same procedures as those of EXAMPLE 2 were repeated to prepare a

9

sinter. One side of the obtained sinter was coated with an insulating paste, followed by heat treatment, thereby obtaining a sample. The sample was subjected to the measurement of the apparent specific inductive capacity $\varepsilon app$, etc. The results are shown in the following table.

EXAMPLE 3

518.8 g of strontium carbonate ($SrCO_3$), 280.2 g of titanium oxide ($TiO_2$), and 0.9 g of niobium oxide ($Nb_2O_5$) were weighed out so that the proportions of $TiO_2$ and $Nb_2O_5$ were respectively 0.998 mol% and 0.001 mol% based on 1 mol of $SrCO_3$, and calcined to obtain a $Sr(Ti_{0.998}Nb_{0.002})O_3$ powder having an average particle diameter of 5 μm. Thereafter, 50 g of $Sr(Ti_{0.998}Nb_{0.002})O_3$ as prepared above, 2.15 g of calcium acetate $[Ca(C_2H_3O_2)_2]$, and 2.56 g of titanium oxynitrate $[TiO(NO_3)_2]$ were weighed out so that the proportions of $Ca(C_2H_3O_2)_2$ and $TiO(NO_3)_2$ were each 5 mol% based on 1 mol of $Sr(Ti_{0.998}Nb_{0.002})O_3$, and fired in a reducing atmosphere in the same manner as that of EXAMPLE 2, except that the firing was conducted at 1400°C. Thus, there was obtained 50 sinters.

Elementary compositions of the sinters thus obtained were examined in the same manner as that of EXAMPLE 1 with a scanning transmission electron microscope. As a result, it was found that the sinter comprised grains each composed of a main phase of $Sr(Ti, Nb)O_3$ and a composite phase of $(Sr, Ca)TiO_3$ and surrounding the main phase, and grain boundary phases present between these grains.

In the same manner as that of EXAMPLE 1, semiconductor ceramics of grain boundary insulation type were prepared from the remaining sinters, and the apparent specific inductive capacity, $\varepsilon$app, etc. of the semiconductor ceramics was measured. The data thus obtained were averaged and the results are shown in the following table.

COMPARATIVE EXAMPLE 3

50 g of $Sr(Ti_{0.998}Nb_{0.002})O_3$ having an average particle diameter of 5 μm, 1.36 g of calcium carbonate $(CaCO_3)$, and 1.09 g of titanium oxide $(TiO_2)$ were weighed out so that the proportions of $CaCO_3$ and $TiO_2$ were each 5 mol% based on 1 mol of $Sr(Ti_{0.998}Nb_{0.002})O_3$. Thereafter, the same procedures as those of EXAMPLE 3 were repeated to prepare a sinter. One side of the obtained sinter was coated with an insulating paste, followed by heat treatment, thereby obtaining a sample. The sample was subjected to the measurement of the apparent specific inductive capacity $\varepsilon$app, etc.

11

The results are shown in the following table.

Table

| | Composition | εapp 25°C 1 kHz | tanσ 25°C 1 kHz | IR (MΩ) |
|---|---|---|---|---|
| Ex. 1 | main phase: ZnO<br>composite phase: $(Zn, Ca)TiO_3$ | 20.000 | 0.50 | $7 \times 10^3$ |
| Comp. Ex. 1 | $ZnO-0.02CaO-0.02TiO_2$ | immeasurable because of semiconductor | | |
| Ex. 2 | main phase: $TiO_2$<br>composite phase: $(Ba, Sr)TiO_3$ | 150.000 | 4.6 | $3 \times 10^4$ |
| Comp. Ex. 2 | $TiO_2-0.03BaO-0.02SrO$ | 1.000 | 12.5 | $5 \times 10^3$ |
| Ex. 3 | main phase: $Sr(Ti0.998Nb0.002)O_3$<br>composite phase: $(Sr, Ca)TiO_3$ | 50.000 | 1.2 | $2 \times 10^4$ |
| Comp. Ex. 3 | $(Sr, Ca)(Ti, Nb)O_3$ | 30.000 | 1.6 | $1 \times 10^4$ |

As is apparent from the table, all the semiconductor ceramics of grain boundary insulation type prepared in EXAMPLES 1 to 3 were not only far higher in apparent specific inductive capacity, $\varepsilon app$, than the semiconductor ceramics prepared in COMPARATIVE EXAMPLES 1 to 3 but also superior in dielectric loss, $tan\sigma$, and insulation resistance, IR, to the semiconductor ceramics prepared in COMPARATIVE EXAMPLES 1 to 3.

(Effect of the Invention)

As is apparent from the foregoing description, the semiconductor ceramic of grain boundary insulation type according to the present invention exhibits an excellent apparent specific inductive capacity, $\varepsilon app$, by virtue of its structure such that each grain constituting a polycrystal comprises a semiconductive oxide main phase and a dielectric oxide composite phase surrounding said main phase and composed of a component of said main phase and a component other than that of said main phase.

14

C L A I M S

1. A semiconductor ceramic of grain boundary insulation type comprising a polycrystalline substance, characterized in that each of grains (2) constituting said polycrystalline substance comprises a semiconductive oxide main phase (3) and a dielectric oxide composite phase (4) surrounding said main phase (3) and composed of a component of said main phase (3) and a component other than that of said main phase (3).

2. A semiconductor ceramic according to claim 1, characterized in that said main phase (3) comprises an oxide containing at least one element selected from among Mg, Ca, Sr, Ba, Ni, Cu, Zn, Pb and Bi and at least one element selected from among Ti, Zr, Nb, Ta, Cr, Mn, Fe, Co, Y, La, Ce, Pr, Nd, Sm, Dy, Aℓ, Si, W, Sn and Sb.

3. A semiconductor ceramic according to claim 1, characterized in that said main phase (3) comprises an oxide of a single element.

4. A semiconductor ceramic according to any one of claims 1 to 3, characterized in that said component other than that of said main phase (3) comprises an element selected from among Li, Na, K, Mg, Ca, Sr, Ba, Ni, Cu, Zn, Pb, Bi and Ti.

# FIG.1

# FIG.2